# FASCICULE DE BREVET EUROPEEN

(11) **EP 2 474 512 B1**
(45) Date de publication et mention de la délivrance du brevet: **26.10.2016**
(21) Numéro de dépôt: 12150309.8
(22) Date de dépôt: 05.01.2012
(51) Int. Cl.: C04B 18/16, C04B 28/04, C04B 38/08

(54) **Béton léger à base de granulats recyclés et son utilisation**
Leichtbeton auf der Basis von Recyclinggranulat, und seine Verwendung
Light concrete made of recycled aggregates and use thereof

(30) Priorité: 07.01.2011 FR 1150126
(43) Date de publication de la demande: 11.07.2012
(73) Titulaire: Centre d'Etudes et de Recherches de l'Industrie du Beton Manufacture, 28230 Epernon (FR)
(72) Inventeur: Dehaudt, Sylvain, 28130 HOUX (FR); Bodivit, Florian, 28300 MAINVILLIERS (FR); Rimlinger, Serge, 38330 MONTBONNOT SAINT-MARTIN (FR); Humbert-Labeaumaz, André, 01090 FRANCHELEINS (FR)
(74) Mandataire: Nevant, Marc

(56) Documents cités:
- DE-A1-102007 062 492

## Description

### Domaine technique de l'invention

La présente invention concerne un béton léger à base de granulats recyclés, son procédé de fabrication et son utilisation, notamment pour la réalisation d'éléments de construction.

### Etat de la technique

Les enjeux du développement durable concernent aujourd'hui tous les secteurs industriels, et notamment celui de la construction qui doit faire face aux problématiques d'économies d'énergie et de réduction des émissions de gaz à effet de serre.

Les analyses de cycle de vie de bâtiments actuels montrent que la majeure partie de leur impact environnemental provient d'une part des matériaux de construction utilisés et d'autre part de l'énergie consommée pour leur chauffage qui lui-même est lié à l'efficacité de leur isolation thermique.

Il est donc aujourd'hui important de pouvoir disposer d'éléments ou parties d'ouvrages structurels ou non structurels pour la construction dont le matériau constitutif présente un faible impact sur l'environnement et qui participe à l'isolation thermique dans un bâtiment du fait de sa faible conductivité thermique.

Les bétons légers présentent une faible conductivité thermique. Leur utilisation est courante depuis plusieurs dizaines d'années. Un béton léger se caractérise couramment par une masse volumique inférieure ou égale à 2000 kg/m³ mesurée après séchage en étuve. Les bétons légers sont généralement obtenus soit grâce à l'emploi de granulats légers, soit grâce à une structure cellulaire.

Les granulats légers utilisés dans la fabrication de bétons légers sont en général des matériaux naturels ou artificiels (copeaux de bois, pierres ponces, vermiculites, perlites, laitiers, pouzzolanes, schistes et argiles expansés, billes de polystyrène). Les bétons à structure cellulaire peuvent être obtenus de deux façons : par auto-clavage d'un mortier (on parlera alors de béton cellulaire) ou par utilisation d'un agent moussant dans un mortier qui est durci à pression atmosphérique (on parlera alors de béton mousse).

Les applications du béton léger en construction sont multiples (remplissage, ragréage, ravoirage, isolation thermique et acoustique, etc.). Les résistances mécaniques de ces bétons sont en général plus faibles que celles des bétons de masse volumique supérieure à 2000 kg/m³ (mesurée après séchage en étuve).

La demande DE-A-10 2007 062 492 décrit un bloc moulé à base de ciment et un procédé de préparation d'un tel bloc. La matrice de ciment utilisée comprend des granulats de béton cellulaire.

### Description de l'invention

Il a maintenant été découvert, et c'est le fondement de l'invention, qu'il est possible d'obtenir des bétons légers possédant de bonnes propriétés isolantes et /ou structurelles en utilisant des granulats à base de béton cellulaire autoclavé. Ces bétons ont une masse volumique (mesurée après séchage en étuve) comprise dans la gamme d'environ 500 à environ 2000 kg/m³. Ils sont réalisables avec des moyens de fabrication conventionnels. Ces bétons présentent également un plus faible impact environnemental, du fait de l'utilisation de granulats recyclés en substitution des granulats légers traditionnels mentionnés ci dessus. Le matériau obtenu permet la réalisation d'éléments de construction moulables, préfabriqués en usine, soit par un procédé de fabrication à démoulage immédiat, soit par un procédé de fabrication à démoulage différé. Le matériau peut également être utilisé directement pour des parties d'ouvrages réalisées sur chantier.

Ainsi, selon un premier aspect, l'invention concerne un béton léger composé d'un liant hydraulique, de granulats légers à base de béton cellulaire autoclavé, d'eau, éventuellement d'adjuvants pour béton et éventuellement aussi d'un ou plusieurs additifs choisis parmi les granulats (autres que les granulats légers à base de béton cellulaire autoclavé), les fillers et les fibres. De préférence, le béton léger selon l'invention comprend un (des) adjuvant(s).

On entend par « granulats légers à base de béton cellulaire autoclavé » des granulats légers provenant soit des rebuts de production de béton cellulaire autoclavé, soit de la déconstruction sélective d'ouvrages ou bâtiments contenant des éléments en béton cellulaire autoclavé. Ces granulats légers « recyclés » sont donc composés essentiellement de sable, de ciment et de chaux. Ils possèdent avantageusement une granulométrie comprise dans la gamme d'environ 0 à environ 22,4 mm, de préférence dans la gamme d'environ 4 mm à environ 22,4 mm, de préférence encore dans la gamme d'environ 4 mm à environ 16 mm, et sont généralement caractérisés par une masse volumique apparente sèche comprise dans la gamme d'environ 400 à environ 900 kg/m³.

Le béton léger conforme à l'invention est obtenu par mélange des différents constituants susmentionnés, dont les proportions sont les suivantes :
- La proportion massique d'eau efficace, relativement à la quantité de matières sèches, est comprise dans la gamme allant de 4% à 12%, préférentiellement entre environ 4% et environ 7% pour les bétons à démoulage immédiat et environ 7% et environ 12% pour les bétons à démoulage différé;
- La proportion massique d'adjuvants (lorsqu'ils sont présents), relativement au liant hydraulique, est comprise dans la gamme allant de 0,1% à environ 3,5% en extrait sec, préférentiellement dans la gamme allant de 0,5% à 1,5% en extrait sec ;
- La proportion volumique des granulats légers à base de béton cellulaire autoclavé, relativement au volume total des matières sèches, est comprise dans la gamme allant de 20% à 90%.

Selon un mode de réalisation, la proportion massique d'eau efficace, relativement à la quantité de matières sèches, est comprise dans la gamme allant de 4% à 7%, et la proportion volumique des granulats légers à base de béton cellulaire autoclavé, relativement au volume total des matières sèches, est comprise dans la gamme allant de 25% à 90%. Selon un autre mode de réalisation, la proportion massique d'eau efficace, relativement à la quantité de matières sèches, est comprise dans la gamme allant de 7% à 12%, et la proportion volumique des granulats légers à base de béton cellulaire autoclavé, relativement au volume total des matières sèches, est comprise dans la gamme allant de 20% à 80%.

L'eau efficace représente l'eau participant à l'hydratation du béton. Elle correspond à la somme de l'eau ajoutée au moment du malaxage et de l'eau éventuellement apportée par les adjuvants, diminuée de la quantité d'eau absorbée par les granulats. Le coefficient d'absorption d'eau des granulats est mesuré selon la norme EN 1097-6.

Le liant hydraulique utilisé dans le cadre de la présente invention est un matériau minéral finement broyé comprenant un ciment et éventuellement une ou plusieurs additions minérales et qui, mélangé à de l'eau, durcit par suite de réactions et de processus d'hydratation. Le liant hydraulique se présente avantageusement sous forme pulvérulente de granulométrie telle qu'au moins 90% des particules passent au tamis de 200 µm (D₉₀ < 200 µm).

Le ciment est typiquement un ciment à base de clinker Portland tel que ceux définis dans la norme EN 197-1.

Les additions minérales peuvent être des laitiers granulés moulus de haut fourneau tels que ceux définis dans la norme EN 15167-1, des cendres volantes pour béton telles que celles définies dans la norme EN 450-1, des fumées de silice pour béton telles que celles définies dans la norme EN 13263-1, des métakaolins pour béton tels que ceux définis dans le projet de norme NF P 18-513, des additions calcaires telles que celles définies dans la norme NF P 18-508, des additions siliceuses telles que celles définies dans la norme NF P 18-509, tout autre composé minéral finement divisé possédant des propriétés liantes dans le béton de l'invention, ou tout mélange des constituants précités.

Lorsqu'elles sont présentes dans le liant hydraulique, les additions minérales sont utilisées dans des proportions telles que leur rapport massique au ciment est avantageusement compris entre environ 0,1/1 et environ 4/1, de préférence entre environ 0,1/1 et environ 3/1.

Les adjuvants utilisés dans le cadre de la présente invention sont constitués d'un ou plusieurs composés organiques permettant de modifier la consistance du béton, tels que les agents de viscosités (XP P 18-340), des accélérateurs de prise ou de durcissement, des retardateurs de prise, des plastifiants ou superplastifiants. Ces derniers peuvent être définis dans la norme EN 934-2. Les superplastifiants peuvent notamment être de la famille des polycarboxylates, des polynaphtalènes sulfonates, des mélamines sulfonates ou des lignosulfonates. A titre d'exemples de superplastifiant, on peut citer ceux commercialisés sous la dénomination GLENIUM®, la dénomination CHRYSOFLUID®, la dénomination VISCOCRETE® ou encore la dénomination MAPEFLUID®.

Les agents de viscosité sont des composés de colloïdaux constitués de longues chaînes de polymères qui adhérent à la périphérie des molécules d'eau et adsorbent une partie de cette eau. A titre d'exemples d'agent de viscosité, on peut citer ceux commercialisés sous la dénomination RHEOMAC®, la dénomination CHRYSO®Plast V90, la dénomination V-MAR® 3 ou encore la dénomination VISCOSTAR 3K.

Lorsqu'ils sont présents dans la composition du béton léger selon l'invention, les additifs sont utilisés dans les proportions suivantes :
- la proportion volumique de granulats (autres que les granulats légers à base de béton cellulaire autoclavé), relativement au volume total des matières sèches, est comprise dans la gamme d'environ 20% à environ 85% ;
- la proportion massique de fillers, relativement au liant hydraulique, est au plus égale à environ 200%, et est préférentiellement comprise dans la gamme allant de 10% à 100% ;
- la proportion massique de fibres, relativement au liant hydraulique, est au plus égale à 5%, et est préférentiellement comprise dans la gamme allant de 1% à 2%.

Les granulats autres que les granulats recyclés à base de béton cellulaire autoclavé utilisés dans le cadre de la présente invention sont des matériaux granulaires naturels, artificiels ou recyclés d'origine minérale, tels que définis dans la ou les norme(s) EN 12620 et/ou EN 13055-1 ; ce sont typiquement des sables ou des gravillons, dont le diamètre du plus gros granulat est inférieur à 22,4 mm.

Les fillers (également appelés fines) utilisés dans le cadre de la présente invention sont des granulats tels que ceux définis dans la norme EN 12620. Les fillers se présentent sous forme pulvérulente de granulométrie telle que le diamètre du plus gros granulat est inférieur à 2 mm et D₈₅ < 125 µm et D₇₀ < 63 µm.

Les fibres utilisées dans le cadre de la présente invention sont des fibres d'acier ou des fibres de polymère telles que celles définies dans les normes EN 14889-1 et EN 14889-2.

Le béton léger conforme à l'invention peut être fabriqué avec des malaxeurs couramment utilisés pour la fabrication des bétons. Ainsi, selon un deuxième aspect, l'invention concerne un procédé de fabrication d'un béton léger tel que défini précédemment, qui comprend les étapes suivantes :
- le malaxage des granulats légers à base de béton cellulaire autoclavé, ces granulats étant secs ;
- un prémouillage par ajout d'une première partie d'eau ;
- l'ajout du liant hydraulique et des additifs secs éventuels ;
- l'ajout d'une deuxième partie d'eau et des adjuvants au mélange ainsi obtenu, et le malaxage du tout jusqu'à l'obtention d'un matériau homogène, dont la consistance dépend de l'application visée.

Les constituants nécessaires à la confection du béton léger peuvent également se présenter sous la forme d'un pré-mélange sec auquel on ajoutera de l'eau sur le chantier même afin de préparer le béton léger.

Ainsi, selon un troisième aspect, l'invention concerne un pré-mélange sec pour béton léger, composé d'un liant hydraulique, de granulats légers à base de béton cellulaire autoclavé, éventuellement d'adjuvants pour béton et éventuellement aussi d'un ou plusieurs additifs choisis parmi les granulats (autres que les granulats légers à base de béton cellulaire autoclavé), les fillers et les fibres. Les différents constituants du pré-mélange sont tels que définis ci-dessus en référence au béton léger, et sont utilisés dans les mêmes proportions.

Dans tous les cas le matériau est protégé de la dessiccation au jeune âge. Le béton durci est léger et homogène. Il présente les propriétés suivantes :
- une masse volumique à l'état sec (mesurée d'après la norme EN 12390-7) comprise dans la gamme allant de 500 kg/m³ à 2000 kg/m³ ;
- une conductivité thermique (mesurée d'après la norme EN 12664) comprise dans la gamme allant de 0,2 W/K.m à 1,6 W/K.m ;
- une résistance mécanique à la compression à 28 jours (mesurée d'après la norme EN 12390-3) comprise dans la gamme allant de 3 à 60 MPa.

Le béton léger selon l'invention a un impact environnemental réduit grâce à l'incorporation de granulats recyclés.

Du fait de ses propriétés structurelles et isolantes, le béton léger selon l'invention peut être avantageusement utilisé comme matériau de construction, pour la réalisation d'éléments de construction (durcis), tels que des éléments moulables et des parties d'ouvrage. Ces éléments moulables (préfabriqués en usine, soit par un procédé de fabrication à démoulage immédiat, soit par un procédé de fabrication à démoulage différé) et ces parties d'ouvrage (réalisables sur chantier) permettent d'améliorer l'isolation thermique des bâtiments.

Les éléments préfabriqués en usine et les parties d'ouvrage réalisées sur chantier s'assemblent sur le chantier avec simplicité du fait de leur légèreté.

Ainsi, selon un autre aspect, l'invention concerne un élément de construction réalisé à partir du béton léger décrit ci-dessus. A titre d'éléments susceptibles d'être fabriqués avec ledit béton, on peut citer notamment des produits modulaires de type blocs (avec ou sans alvéoles), entrevous, linteaux ou pré-linteaux, ou bien des produits de plus grandes dimensions (comme par exemple des carreaux de cloison technique, des éléments de mur ou de plancher, des éléments de façade non porteurs, des panneaux d'isolation (thermique) pour l'extérieur, des panneaux de vêture à enduire, des conduits de fumée).

Les éléments de construction sont tout particulièrement adaptés à la construction d'ouvrages nécessitant une bonne isolation thermique et/ou une bonne résistance au feu.

Le béton léger selon l'invention peut également être utilisé sur un chantier pour la réalisation de chaînage ou de rupteur thermique par exemple, ou encore comme matériau de ravoirage ou chape autonivelante. Le béton léger peut aussi être utilisé en association avec d'autres matériaux ou bétons, en technique bicouche ou technique « sandwich » par exemple.

L'invention est illustrée par les exemples non limitatifs suivants.

### Exemple 1 : préparation de béton léger contenant des granulats recyclés issus de béton cellulaire

On a préparé une formule de béton léger contenant des granulats recyclés issus de béton cellulaire dans un malaxeur de type planétaire de la marque Couvrot selon le cycle suivant :
- les granulats sont malaxés à sec pendant 30 s à petite vitesse (10 tr/min);
- une partie de l'eau d'ajout, correspondant à la quantité d'eau nécessaire à la saturation d'eau des granulats est ajoutée. L'ensemble est malaxé pendant 1 min 30 s (vitesse de 10 tr/min);
- le ciment et les additions sont ensuite incorporés, puis malaxés 30 s (vitesse de 10 tr/min);
- l'eau d'ajout restante est ensuite introduite, pendant 30 s (vitesse de 20 tr/min);
- L'ensemble est malaxé (grande vitesse : 40 tr/min) pendant une durée de 1min 30, jusqu'à l'obtention d'un mélange homogène.

La composition de la formule est indiquée dans le tableau 1.

**Tableau 1**

| | Masse (kg) | Volume (L) |
|---|---|---|
| Ciment CEM I 52,5 N - Usine du Teil - Lafarge | 333 | 107 |
| Addition calcaire - Betocarb® P2 B EN - Omya | 67 | 25 |
| Sable calcaire 0/4 mm | 809 | 302 |
| Gravillon 4/16 mm à base de béton cellulaire | 257 | 338 |
| | | |
| Eau d'ajout | 339 | 339 |

### Exemple 2 : propriétés et performances du béton

On a mesuré la masse volumique du béton frais obtenu à l'exemple 1 selon le mode opératoire décrit dans la norme EN 12350-6. Le béton frais a ensuite été coulé dans des moules prismatiques de côté 70 mm et de longueur 280 mm, puis protégé de la dessiccation. Les éprouvettes ont été démoulées 24 heures après le malaxage. Elles ont été par la suite conservées dans une atmosphère d'hygrométrie relative supérieure à 95 %.

Des essais de flexion et compression jusqu'à rupture ont été effectués 7 jours après la fabrication d'après les normes EN 12390-5 et EN 12390-3 respectivement.

La masse volumique à l'état sec, mesurée d'après la norme EN 12390-7, a été déterminée 7 jours après le malaxage.

Les propriétés du béton sont indiquées dans le tableau 2.

**Tableau 2**

| Caractéristique | |
|---|---|
| Masse volumique à l'état frais (kg/m³) | 1837 |
| Masse volumique à l'état sec (kg/m³) | 1635 |
| Résistance à la flexion à 7 jours (MPa) | 2,2 |
| Résistance en compression à 7 jours (MPa) | 21 |

### Exemple 3 : préparation de béton léger contenant des granulats recyclés issus de béton cellulaire

On a répété l'exemple 1 en utilisant les ingrédients listés dans le tableau 3.

**Tableau 3**

| | Masse (kg) | Volume (L) |
|---|---|---|
| Ciment CEM I 52,5 N - Usine du Teil - Lafarge | 333 | 107 |
| Addition calcaire - Betocarb® P2 B EN - Omya | 67 | 25 |
| Sable calcaire 0/4 mm | 809 | 302 |
| Gravillon 4/16 mm à base de béton cellulaire | 257 | 338 |
| Superplastifiant - Premia 150 - Chryso | 0,1 | 0,33 |
| Eau d'ajout | 339 | 339 |

Les propriétés du béton obtenu sont identiques à celles figurant dans le tableau 2.

## Revendications

1. Béton léger composé d'un liant hydraulique, de granulats légers à base de béton cellulaire autoclavé, d'eau et éventuellement d'adjuvants pour béton, dans lequel :
- la proportion massique d'eau efficace, relativement à la quantité de matières sèches, est comprise dans la gamme allant de 4% à 12% ;
- la proportion massique d'adjuvants (lorsqu'ils sont présents), relativement au liant hydraulique, est comprise dans la gamme allant de 0,1% à 3,5% en extrait sec ;
- la proportion volumique des granulats légers à base de béton cellulaire autoclavé, relativement au volume total des matières sèches, est comprise dans la gamme allant de 20% à 90%.

2. Béton léger selon la revendication 1, dans lequel les granulats légers à base de béton cellulaire autoclavé ont une granulométrie comprise dans la gamme allant de 4 mm à 22,4 mm, et possèdent une masse volumique apparente sèche comprise dans la gamme allant de 400 à 900 kg/m³.

3. Béton léger selon la revendication 1 ou la revendication 2, dans le lequel le liant hydraulique possède une granulométrie D₉₀ < 200 µm.

4. Béton léger selon l'une des revendications 1 à 3, dans lequel la proportion massique d'eau efficace, relativement à la quantité de matières sèches, est comprise dans la gamme allant de 4% à 7%, et la proportion volumique des granulats légers à base de béton cellulaire autoclavé, relativement au volume total des matières sèches, est comprise dans la gamme allant de 25% à 90%.

5. Béton léger selon l'une des revendications 1 à 3, dans lequel la proportion massique d'eau efficace, relativement à la quantité de matières sèches, est comprise dans la gamme allant de 7% à 12%, et la proportion volumique des granulats légers à base de béton cellulaire autoclavé, relativement au volume total des matières sèches, est comprise dans la gamme allant de 20% à 80%.

6. Béton léger selon l'une des revendications 1 à 5, qui est également composé d'un ou plusieurs additifs choisis parmi les granulats autres que les granulats légers à base de béton cellulaire autoclavé, les fillers et les fibres, dans les proportions suivantes :
- la proportion volumique de granulats autres que les granulats légers à base de béton cellulaire autoclavé, relativement au volume total des matières sèches, est comprise dans la gamme allant de 20% à 85% ;
- la proportion massique de fillers, relativement au liant hydraulique, est au plus égale à 200% ;
- la proportion massique de fibres, relativement au liant hydraulique, est au plus égale à 5%.

7. Béton léger selon l'une des revendications 1 à 6, qui comprend un ou plusieurs adjuvants.

8. Béton léger selon l'une des revendications 1 à 7, qui possède une masse volumique à l'état sec comprise dans la gamme allant de 500 kg/m³ à 2000 kg/m³.

9. Béton léger selon l'une des revendications 1 à 8, qui possède une conductivité thermique comprise dans la gamme allant de 0,2 W/m.K à 1,6 W/m.K.

10. Béton léger selon l'une des revendications 1 à 9, qui possède une résistance mécanique à la compression à 28 jours comprise dans la gamme allant de 3 MPa à 60 MPa.

11. Utilisation du béton léger selon l'une des revendications 1 à 10 comme matériau de construction.

12. Elément de construction obtenu à partir du béton léger tel que défini dans l'une des revendications 1 à 10.

13. Elément de construction selon la revendication 12, qui est choisi parmi un bloc avec ou sans alvéoles, un entrevou, un linteau ou pré-linteau, un carreau de cloison technique, un élément de mur ou de plancher, un élément de façade non porteur, un panneau d'isolation, un panneau de vêture à enduire, un conduit de fumée.

## Patentansprüche

1. Leichtbeton, bestehend aus einem hydraulischen Bindemittel, Leichtgranulat auf Basis von autoklavgehärtetem Porenbeton, Wasser und eventuell Zusatzstoffen für Beton, bei dem:
- der wirksame Masseanteil von Wasser, bezogen auf die Trockenmaterialmenge, in dem Bereich von 4 % bis 12 % liegt,
- der Masseanteil von Zusatzstoffen (wenn sie vorhanden sind), bezogen auf das hydraulische Bindemittel, in dem Bereich von 0,1 % bis 3,5 % Trockenextrakt liegt,
- der Volumenanteil des Leichtgranulats auf Basis von autoklavgehärtetem Porenbeton, bezogen auf das Gesamtvolumen der Trockenmaterialien, in dem Bereich von 20 % bis 90 % liegt.

2. Leichtbeton nach Anspruch 1, bei dem das Leichtgranulat auf Basis von autoklavgehärtetem Porenbeton eine Granulometrie in dem Bereich von 4 mm bis 22,4 mm hat und eine Gesamtmassendichte in dem Bereich von 400 bis 900 kg/m³ aufweist.

3. Leichtbeton nach Anspruch 1 oder Anspruch 2, bei dem das hydraulische Bindemittel eine Granulometrie D₉₀ < 200 µm aufweist.

4. Leichtbeton nach einem der Ansprüche 1 bis 3, bei dem der wirksame Masseanteil von Wasser, bezogen auf die Trockenmaterialmenge, in dem Bereich von 4 % bis 7 % liegt, und der Volumenanteil des Leichtgranulats auf Basis von autoklavgehärtetem Porenbeton, bezogen auf das Gesamtvolumen an Trockenmaterialien, in dem Bereich von 25 % bis 90 % liegt.

5. Leichtbeton nach einem der Ansprüche 1 bis 3, bei dem der wirksame Masseanteil von Wasser, bezogen auf die Trockenmaterialmenge, in dem Bereich von 7 % bis 12 % liegt, und der Volumenanteil des Leichtgranulats auf Basis von autoklavgehärtetem Porenbeton, bezogen auf das Gesamtvolumen an Trockenmaterialien, in dem Bereich von 20 % bis 80 % liegt.

6. Leichtbeton nach einem der Ansprüche 1 bis 5, der auch aus einem oder mehreren Zusatzstoffen besteht, die unter Granulat, abgesehen von Leichtgranulat auf Basis von autoklavgehärtetem Porenbeton, den Füllstoffen und den Fasern in folgenden Verhältnissen ausgewählt sind:
- der Volumenanteil von Granulat, abgesehen von Leichtgranulat auf Basis von autoklavgehärtetem Porenbeton, bezogen auf das Gesamtvolumen der Trockenmaterialien, liegt in dem Bereich von 20 % bis 85 %,
- der Masseanteil von Füllstoffen, bezogen auf das hydraulische Bindemittel, ist höchstens gleich 200 %,
- der Masseanteil von Fasern, bezogen auf das hydraulische Bindemittel, ist höchstens gleich 5 %.

7. Leichtbeton nach einem der Ansprüche 1 bis 6, der einen oder mehrere Zusatzstoffe umfasst.

8. Leichtbeton nach einem der Ansprüche 1 bis 7, der eine Massendichte im trockenen Zustand in dem Bereich von 500 kg/m³ bis 2000 kg/m³ besitzt.

9. Leichtbeton nach einem der Ansprüche 1 bis 8, der eine Wärmeleitfähigkeit in dem Bereich von 0,2 W/m.K bis 1,6 W/m.K besitzt.

10. Leichtbeton nach einem der Ansprüche 1 bis 9, der einen mechanischen Widerstand gegen Kompression über 28 Tage in dem Bereich von 3 MPa bis 60 MPa besitzt.

11. Verwendung des Leichtbetons nach einem der Ansprüche 1 bis 10 als Baumaterial.

12. Bauelement, das aus Leichtbeton, wie in einem der Ansprüche 1 bis 10 definiert, hergestellt ist.

13. Bauelement nach Anspruch 12, das unter einem Block mit oder ohne Poren, einem Blindboden, einem Sturzprofil oder Blindstock, einem Ziegel einer technischen Trennwand, einem Mauer- oder Bodenelement, einem nicht tragenden Fassadenelement, einer Isolierplatte, einer zu beschichtenden Verkleidungsplatte, einer Abzugsleitung ausgewählt ist.

## Claims

1. A lightweight concrete composed of a hydraulic binder, lightweight aggregate of autoclaved aerated concrete, water and optionally additives for concrete, wherein:
- the effective weight proportion of water relative to the amount of dry matter is in the range of 4 % to 12 %;
- the weight proportion of additives (when present) relative to the hydraulic binder is in the range of 0.1 % to 3.5 % dry extract;
- the volume proportion of lightweight aggregate of autoclaved aerated concrete relative to the total volume of dry matter is in the range of 20 % to 90 %;

2. The lightweight concrete according to claim 1, wherein the lightweight aggregate of autoclaved aerated concrete has a particle size in the range of 4 mm to 22.4 mm, and has a dry bulk density in the range of 400 to 900 kg/m³.

3. The lightweight concrete according to claim 1 or claim 2, wherein the D₉₀ particle size of the hydraulic binder is < 200 µm.

4. The lightweight concrete according to one of claims 1 to 3, wherein the effective weight proportion of water relative to the amount of dry matter is in the range of 4 % to 7 %, and the volume proportion of lightweight aggregate of autoclaved aerated concrete relative to the total volume of dry matter is in the range of 25 % to 90 %.

5. The lightweight concrete according to one of claims 1 to 3, wherein the effective weight proportion of water relative to the amount of dry matter is in the range of 7 % to 12 %, and the volume proportion of lightweight aggregate of autoclaved aerated concrete relative to the total volume of dry matter is in the range of 20 % to 80 %.

6. The lightweight concrete according to one of claims 1 to 5, which is also composed of one or more additives selected from among aggregate other than the lightweight aggregate of autoclaved aerated concrete, fillers and fibres in the following proportions:
- the volume proportion of aggregate other than the lightweight aggregate of autoclaved aerated concrete relative to the total volume of dry matter is in the range of 20 % to 85 %;
- the weight proportion of fillers relative to the hydraulic binder is no more than 200 %;
- the weight proportion of fibres relative to the hydraulic binder is no more than 5%.

7. The lightweight concrete according to one of claims 1 to 6 which comprises one or more additives.

8. The lightweight concrete according to one of claims 1 to 7 which has a dry density in the range of 500 kg/m³ to 2000 kg/m³.

9. The lightweight concrete according to one of claims 1 to 8 having a thermal conductivity in the range of 0.2 W/m.K to 1.6 W/m.K.

10. The lightweight concrete according to one of claims 1 to 9 having a compressive mechanical strength at 28 days in the range of 3 MPa to 60 MPa.

11. Use of the lightweight concrete according to one of claims 1 to 10 as building material.

12. A construction element obtained from the lightweight concrete as defined in one of claims 1 to 10.

13. The construction element according to claim 12 which is selected from among alveolar or non-alveolar blocks, flooring blocks, lintels or pre-lintels, heavy duty partition wall blocks, wall or floor elements, non-loadbearing façade elements, insulating panels, cladding panels to be plastered, flue ducts.
